# EUROPEAN PATENT SPECIFICATION

(11) **EP 4 606 208 B1**
(45) Date of publication and mention of the grant of the patent: **11.03.2026**
(21) Application number: 24159556.0
(22) Date of filing: 26.02.2024
(51) Int. Cl.: A01G 3/025

(54) **CUTTING TOOL**
SCHNEIDWERKZEUG
OUTIL DE COUPE

(43) Date of publication of application: 27.08.2025
(73) Proprietor: Husqvarna AB, 561 82 Huskvarna (SE)
(72) Inventor: Kistler, Michael, 89185 Hüttisheim (DE)
(74) Representative: Finkele, Rolf

(56) References cited:
- DE-U1- 202009 000 054
- GB-A- 2 605 369
- US-A- 5 950 315
- US-A1- 2010 299 939
- US-A1- 2011 113 635
- US-A1- 2012 167 397

## Description

### TECHNICAL FIELD

The present disclosure relates to a cutting tool, in particular a lopper, with an elongated handle for cutting tree branches, twigs, and shrubs.

### BACKGROUND

A cutting tool, particularly a lopper, may include an elongated handle that may offer easier cutting of branches or twigs, which may be difficult to access as they may be high lying. The lopper may further include a cutting head that may be attached to a front end (or a first end) of the elongated handle and may be configured to perform a cutting action. Further, the lopper may include a pull handle provided at a back end (or a second end) of the elongated handle and movable relative to the elongated handle. The cutting head and the pull handle may be operatively connected to each other via a pulling means, for example a pulling belt or a pulling strap.

The movement of the cutting head may be done by virtue of the pulling means such that the pulling means may transmit a pulling force that may be caused by a movement of the pull handle to the cutting head in order to perform a cutting action.

An example of a cutting tool, particularly a lopper, is provided in European Patent EP 3,407,701 B1 (hereinafter referred to as '701 reference). The '701 reference provides a pruning tool, in particular a lopper. The pruning tool includes an elongated handle, wherein a movable working device is arranged at a first end portion of the handle and a movable handle grip is arranged at a second end portion of the handle. Further, the pruning tool includes a pulling member such that a first end of the pulling member is operatively connected to the working device and a second end of the pulling member is attached to the hand grip. The working device is actuated by pulling out the hand grip away from the elongated handle. GB2605369A, US2012/167397A1 and DE202009000054U1 disclose other examples of a cutting tool.

However, in the generally known loppers, the pulling means, for example the pulling belt or the pulling strap is difficult to mount. Further, in generally known loppers, if the pulling means has elongated after prolonged use of the lopper, the customer is prevented from adjusting the pulling means back to the optimum length.

### SUMMARY OF THE INVENTION

In view of the above, it is an objective of the present invention to solve or at least reduce the drawbacks discussed above. The objective is at least partially achieved by a cutting tool.

According to an aspect of the present invention, the cutting tool, particularly a lopper, comprises an elongated handle. A cutting head is mounted to a first end of the elongated handle and a pull handle is provided at a second end of the elongated handle such that the second end is opposite of the first end. The pull handle is movable relative to the elongated handle and a pulling means is arranged at least partially in the elongated handle such that a force is transmittable from the pull handle to the cutting head via the pulling means. An end of the pulling means is fastened to the pull handle by a fastening device. The cutting tool is characterized in that the fastening device comprises a pull-through protection body. The pull-through protection body comprises an opening extending through the pull-through protection body. A clamping element is configured to fasten the pulling means to the pull-through protection body such that the end of the pulling means is guided through the opening, around the clamping element and back through the opening such that the clamping element fastens, particularly clamps, the pulling means to at least a part of the opening for securing the pulling means to the pull handle.

Thus, the present disclosure provides an improved cutting tool, particularly the improved lopper that may advantageously comprise the fastening device to fasten the end of the pulling means with the pull handle. The fastening device may substantially prevent retraction of the pulling means. In other words, the fastening device may prevent the end of the pulling means from inadvertently getting disengaged or disconnected from the pull handle when the pull handle may be moved relative to the elongated handle to operate the cutting head. The fastening device may provide easy, ergonomic, fast, and adjustable fastening of the pulling means with the pull handle. The fastening device may be simple in design and manufacture. The fastening device may easily be inserted into the pull handle for fastening the pulling means with the pull handle. The fastening may ensure smooth and uninterrupted working of the lopper, or any other related cutting tool. Furthermore, the cutting tool according to the present invention provides the advantage that the length of the pulling means is adjustable before usage as well as after usage of the cutting tool in an easy and ergonomically way by the end user, particularly in a toolless manner.

According to an exemplary embodiment of the invention, the pull-through protection body is an elongated pull-through protection body comprising an elongated opening. The pull-through protection body may have the elongated, easy to hold, and compact structure. Further, the elongated opening may be a through opening. Further, the elongated opening may have dimensions suitable enough to allow at least partial superposition of different portions of the end of the pulling means.

According to an exemplary embodiment of the invention, the pull-through protection body comprises a first side surface and a second side surface being opposite to the first side surface such that the opening in the pull-through protection body extends from the first side surface to the second side surface. The clamping element is positioned at the second side surface of the pull-through protection body such that the second side surface faces the clamping element, and the first side surface faces the elongated handle, when the fastening device is mounted to the pull handle. The relative positioning of the pull-through protection body and the clamping element may facilitate strong and secure clamping of the pulling means to at least a part of the opening of the pull-through protection body for securing the pulling means to the pull handle.

According to an exemplary embodiment of the invention, the opening is configured to allow the passage of the pulling means through the pull-through protection body from the first side surface of the pull-through protection body and/ or the second side surface of the pull-through protection body. The opening may allow the passage of the pulling means therethrough such that the pulling means may be extended or guided from the first side surface of the pull-through protection body to the second side surface of the pull-through protection body and further around the clamping element and back through the opening such that fastening device may be able to substantially prevent the retraction of the end of the pulling means towards the cutting head.

According to an exemplary embodiment of the invention, the opening comprises an inner surface such that the inner surface extends from the first side surface to the second side surface. The inner surface is configured to engage with the pulling means when the pulling means is fastened to the inner surface of the opening by the clamping element. The clamping element may at least partially extend into the opening proximate the second side surface and occupy some space in the opening. The clamping element may substantially reduce or restrict the area of passage of the pulling means, or at least a portion of the pulling means through the opening such that the pulling means, or at least the portion of the pulling means may be tightly sandwiched between the inner surface and the clamping element. Consequently, a slippage of the pulling means and thereby an elongating of the part of pulling means towards the cutting head may be inhibited. Furthermore, the retraction of the end of the pulling means towards the cutting head may be substantially averted.

According to an exemplary embodiment of the invention, the pull handle comprises a mounting opening, particularly a mounting groove, in which the fastening device is inserted and seated substantially unmovable. The mounting opening may be configured to allow engagement of the fastening device, particularly the pull-through protection body, with the pull handle. The engagement between the mounting opening and the pull-through protection body may be such that the pull-through protection body may substantially maintain the position within the mounting opening even when tensile force may be acting on the pulling means, particularly during the movement of the pull handle in the direction away from the cutting head. Consequently, the clamping of the pulling means between the clamping element and the inner surface of the opening may be maintained throughout the operation of the cutting tool, particularly the lopper and may thereby substantially prevent the retraction of the end of the pulling means towards the cutting head.

According to an exemplary embodiment of the invention, the mounting opening is configured such that the fastening device is insertable only in a pre-defined orientation. According to a further exemplary embodiment, in the pre-defined orientation, the clamping element and the pulling means loop are positioned on the second side surface of the pull-through protection body. The pulling means loop is formed by guiding the pulling means through the opening, around the clamping element and back through the opening. Such orientation may result in efficient functioning of the fastening device to prevent the retraction of the end of the pulling means towards the cutting head. When the end of the pulling means may experience the tensile force during the movement of the pull handle in the direction away from the cutting head, the portion of the end of the pulling means around the clamping element may press or push the clamping element towards the second side surface of the pull-through protection body such that the clamping element may be able to effectively clamp the pulling means.

According to an exemplary embodiment of the invention, the pull-through protection body is a prism-shaped body, preferably a hexagonal prism, a square prism, or a rectangular prism. The shape of the pull-through protection body may be chosen dependent on a shape and size of the mounting opening. Thereby, the pull-through protection body may be compatible for the secure engagement with the mounting opening or the mounting groove.

According to an exemplary embodiment of the invention, the pull-through protection body comprises a body part, a first end part, and a second end part. The body part is positioned in-between the first end part and the second end part. The first end part and the second end part are configured to engage with the mounting opening such that the fastening device is inserted and seated substantially unmovable in the mounting opening. In particular, the first end portion and/ or the second end portion is cube-shaped or cuboid-shaped. The dimensions of the pull handle and hence the dimensions of the mounting opening may be variable based on the grip of a user of the cutting tool, particularly the lopper. Hence, when the dimensions of the pull-through protection body may be less than the dimensions of the mounting opening, the pull-through protection body may be fixedly or removably provided with the first end part and the second end part engaged with inner wall portions of the mounting opening. Hence, the pull-through protection body may be securely mounted to the pulling handle and there may be space available between the inner walls of the mounting opening and an outer surface of the body part. This space may be used to store parts of the pulling means therein which has been, particularly winded, on the body part due to an elongation of the pulling means caused by cutting forces.

According to an exemplary embodiment of the invention, a turning of the fastening device leads to a shortening of the pulling means without demounting the pulling means from the fastening device. During the lifecycle of the cutting tool, the pulling means may elongate or slip and therefore slack due to tensile force that may act on the pulling means. Hence, the pulling means may no longer be able to efficiently transfer the force from the pull handle to the cutting head. Thus, to maintain the optimum force transfer between the pull handle and the cutting head, the fastening device along with the pulling means may be extracted out of the mounting opening. Then the fastening device may be turned or rotated to substantially reduce the elongation in the pulling means.

According to an exemplary embodiment of the invention, the clamping element is an elongated body with a substantially drop-shaped cross-section. The drop-shaped cross-section may be exemplified as an ice-cream cone, or a tear drop. In geometrical terms, the drop-shaped cross-section may be like coupling a hemisphere with a cone. The drop-shaped cross-section of the clamping element may allow at least partial intrusion of the clamping element into the opening in the pull-through protection body such that the clamping element may be able to effectively clamp the end of the pulling means with the inner surface of the opening. The drop-shaped cross-section of the elongated body may allow easy insertion needing low force. Thereby, the user may easily and convenient insert the clamping element into the pull-through protection body. At the same time, this drop-shaped cross-sectional design may provide an increased clamping force to the pulling means.

According to an exemplary embodiment of the invention, the pulling means is a pulling belt. The pulling means may be the pull belt, a pull strap, a pull cable, or a pull rope. The pulling means may be chosen dependent on the force to be transferred from the pull handle to the cutting head. By providing the pulling means as a pulling belt, the pulling belt may be securely clamped in position in the opening, and at the same time an elongation may be compensated by a mere turning of the pull-through protection body. Thereby, an easy to operate and secure cutting tool may be providable.

According to an exemplary embodiment of the invention, the elongated handle is a telescopic elongated handle such that the elongated handle comprises at least two, particularly three, handle portions being telescopically movable relative to each other. The telescoping elongated handle may advantageously increase the range of the cutting tool such that the cutting tool may be used to perform cutting action closer or distant from the user as per requirement.

According to an exemplary embodiment of the invention, the cutting tool comprises a pulling sleeve movably mounted to the elongated handle at a position between the first end and the second end of the elongated handle, wherein the pulling means is further connected to the pulling sleeve such that the pulling means is operable by the pull handle and/or the pulling sleeve. Thereby, the cutting head may be actuated either by the pull handle or by the pulling sleeve primarily dependent on the needed cutting force. Hence, a versatile usable cutting tool may be providable.

Before discussing the invention with the help of the drawings, the invention will be briefly discussed in general. A fastening device may be provided with a pull handle of a cutting tool, particularly a lopper. The fastening device may be used to clamp a pulling means to a pull handle of the cutting tool such that the pulling means may be configured to transmit a force from the pull handle to a cutting head of the cutting tool. The fastening device may comprise a pull-through protection body and a clamping element such that instead of making a knot at an end of the pulling means to fasten the pulling means to the pull handle, the pulling means may be guided through the pull-through protection body to clamp the pulling means with the pull handle. The pull-through protection body may be an elongated adjustment element with an elongated continuous opening. The outer surfaces of the pull-through protection body may be parallel to each other, particularly the outer surfaces opposite to each other may be parallel to each other.

The pulling means may be guided once through the pull-through protection body and back again so that the pulling means forms a loop. A clamping element may be inserted into the loop. The clamping element may prevent the loop from slipping through the pull-through protection body under tensile force. The clamping element may jam the pulling means in the pull-through protection body. The whole construction for clamping of the pulling using the fastening device may not be volume increasing when compared to the knot.

Further, one the pulling means may be connected to the pull-through protection body, the pull-through protection body as well as the pulling means may both be inserted into a mounting opening in the pull handle. The mounting opening may be designed in a way that the pull-through protection body with the parallel surfaces may not be able to twist or disorient under the application of the force, particularly the pulling force from the pulling means. Further, the mounting opening may be designed such that the pull-through protection body may be properly guided and positioned in the mounting opening.

Further, if the pulling means may become too loose, the pull handle may wobble. In such a scenario, the fastening device together with the pulling means may be first removed from the pull handle and may then be reinserted into the pull handle after turning the pull-through protection body through 90 degrees, or 180 degrees, or 270 degrees, or 360 degrees or even more degrees. During this process, the pulling means may be wrapped around the pull-through protection body and may thus get shortened. The pull-through protection body may have different shapes.

The fastening device according to the present invention may have fast and uncomplicated assembly. The fastening device according to the present invention may be adjustable before and after usage. The fastening device according to the present invention may be user-friendly.

Other features and aspects of this invention will be apparent from the following description and the accompanying drawings.

### BRIEF DESCRIPTION OF THE DRAWINGS

The invention will be described in more detail with reference to the enclosed drawings, wherein:
FIG. 1 illustrates a perspective view of a cutting tool in accordance with an exemplary embodiment of the present disclosure;
FIG. 2 illustrates a perspective view of a pull-through protection body and a clamping element in accordance with an exemplary embodiment of the present disclosure;
FIG. 3 illustrates a cross-section view of a grip portion of a pull handle in accordance with an exemplary embodiment of the present disclosure;
FIG. 4 illustrates another cross-section view of a grip portion of a pull handle in accordance with an exemplary embodiment of the present disclosure;
FIG. 5 illustrates a perspective view of a fastening device with a hexagonal prism shaped pull-through protection body in accordance with an exemplary embodiment of the present disclosure;
FIG. 6 illustrates a perspective view of a fastening device with an alternative rectangular prism shaped pull-through protection body in accordance with an exemplary embodiment of the present disclosure; and
FIG. 7 illustrates a perspective view of a fastening device with an alternative cylindrical shaped pull-through protection body in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figure. Indeed, the components may be oriented in any direction and the terminology, therefore, should be understood as encompassing such variations unless specified otherwise.

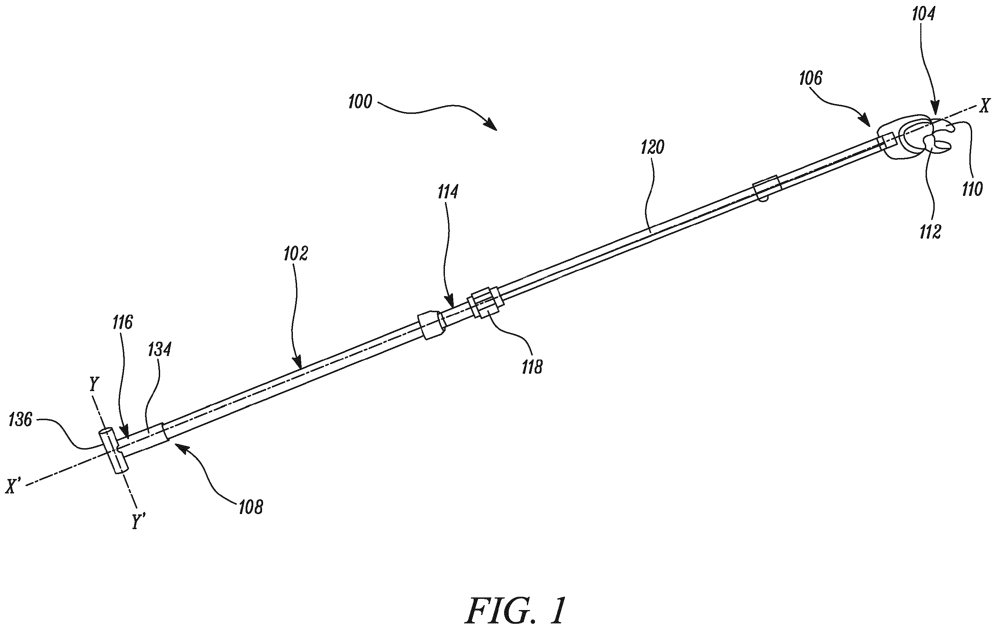

**FIG. 1** illustrates a perspective view of a cutting tool **100.** The cutting tool **100** is a lopper. The cutting tool **100** defines a longitudinal axis **X-X'.** The cutting tool **100** comprises an elongated handle **102** along the longitudinal axis **X-X'.** The elongated handle **102** is a telescopic elongated handle such that the elongated handle **102** comprises at least two, particularly three, handle portions being telescopically movable into each other. The elongated handle **102** comprises a first end **106** and a second end **108** such that the second end **108** is opposite of the first end **106.** A cutting head **104** is mounted to the first end **106** of the elongated handle **102.** The cutting head **104** is a cutting assembly having a stationary blade **110** and a movable blade **112.** For performing a cutting process, the movable blade **112** is movable towards the stationary blade **110** for example by a pivoting arrangement provided in the cutting head **104.**

Further, the cutting tool **100** comprises a pulling sleeve **114** movably mounted to the elongated handle **102** at a position between the first end **106** and the second end **108** of the elongated handle **102.** A stop element **118** that is fixed to the elongated handle **102** limits the movement of the pulling sleeve **114** in the direction of the cutting head **104.**

Further, the cutting tool **100** comprises a pull handle **116.** The pull handle **116** is provided at the second end **108** of the elongated handle **102.** The pull handle **116** is movable relative to the elongated handle **102.** The pull handle **116** has substantially a T-shaped configuration. The pull handle **116** comprises an engaging portion **134** extending along the longitudinal axis **X-X'** and a grip portion **136** extending in a direction perpendicular to the longitudinal axis **X-X'** or extending along a lateral axis **Y-Y'**. The engaging portion **134** is configured to allow engagement between the pull handle **116** and the elongated handle **102.** The grip portion **136** is configured to allow a user to grip or hold the pull handle **116** to move or actuate the pull handle **116** relative to the elongated handle **102.** Further, the grip portion **136** is configured to allow the user to place the grip portion **136** against his body, particularly against his hip, to apply a pulling force on the pulling sleeve **114** and to stabilize the cutting tool **100** during a cutting action.

Further, a pulling means **120** is arranged at least partially in the elongated handle **102** such that a force is transmittable selectively from the pull handle **116** or the pulling sleeve **114** to the cutting head **104** via the pulling means **120.** A respective end of the pulling means **120,** particularly a divided two-parted end of the pulling means **120,** is fastened to the pull handle **116** and the pulling sleeve **114** while the other end of the pulling means **120** is fastened to the movable blade **112** of the cutting head **104.** The pulling means **120** illustrated in **FIG. 1** is a pulling belt and one two-parted split end of the pulling means **120** is fastened to the pull handle **116** and the pulling sleeve **118** while the other end of the pulling means **120** is fastened to the movable blade **112** of the cutting head **104.**

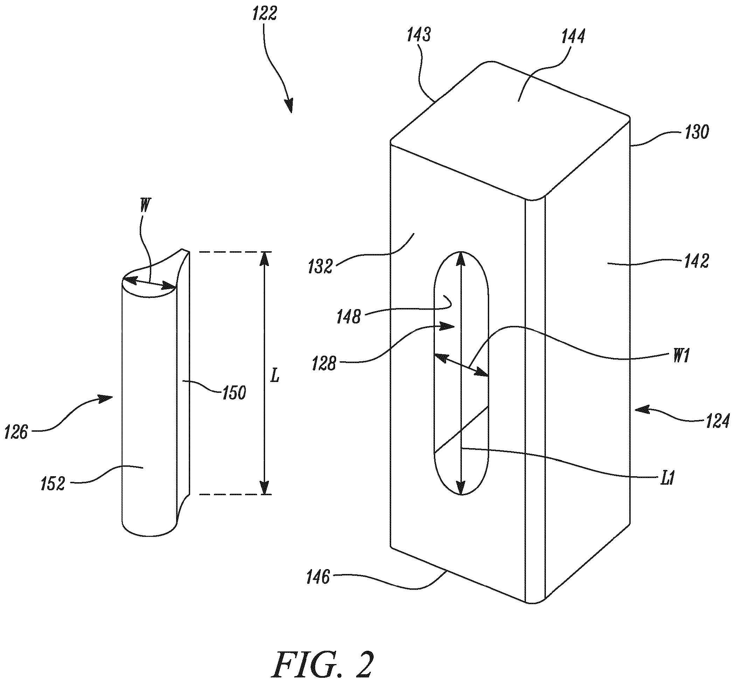

**FIG. 2** illustrates a perspective view of a pull-through protection body **124** and a perspective view of a clamping element **126.** An end of the pulling means **120** is fastened to the pull handle **116** by a fastening device **122.** The fastening device **122** comprises the pull-through protection body **124** and the clamping element **126.**

The pull-through protection body **124** is an elongated pull-through protection body **124.** The pull-through protection body **124** is substantially a prism-shaped body **124,** preferably a square prism **124.** The pull-through protection body **124** comprises a first side surface **130** and a second side surface **132** such that the first side surface **130** is parallel to the second side surface **132.** The first side surface **130** is configured to face towards the elongated handle **102** or the longitudinal axis **X-X'** and the second side surface **132** is configured to face away from the elongated handle **102** or the longitudinal axis **X-X',** when the fastening device **122** is inserted in the pull handle **116** for use. The pull-through protection body **124** further comprises a third side surface **142,** a fourth side surface **143,** an upper side surface **144,** and a lower side surface **146.** The third side surface **142** and the fourth side **143** surface are disposed parallel to each other. Further, the upper side surface **144** is disposed parallel to the lower side surface **146.** Further, the first side surface **130,** the second side surface **132,** the third side surface **142,** and the fourth side surface **143** form the circumference of the pull-through protection body **124.** The upper side surface **144** and the lower side surface **146** each form one of the two opposing and remaining sides of the prism-shaped pull-through protection body **124.**

The pull-through protection body **124** further comprises an elongated opening **128.** The opening **128** extends through the pull-through protection body **124.** The opening **128** in the pull-through protection body **124** extends from the first side surface **130** to the second side surface **132.** The opening **128** comprises an inner surface **148** such that the inner surface **148** extends from the first side surface **130** to the second side surface **132,** and the inner surface **148** forms the surface of the opening **128.**

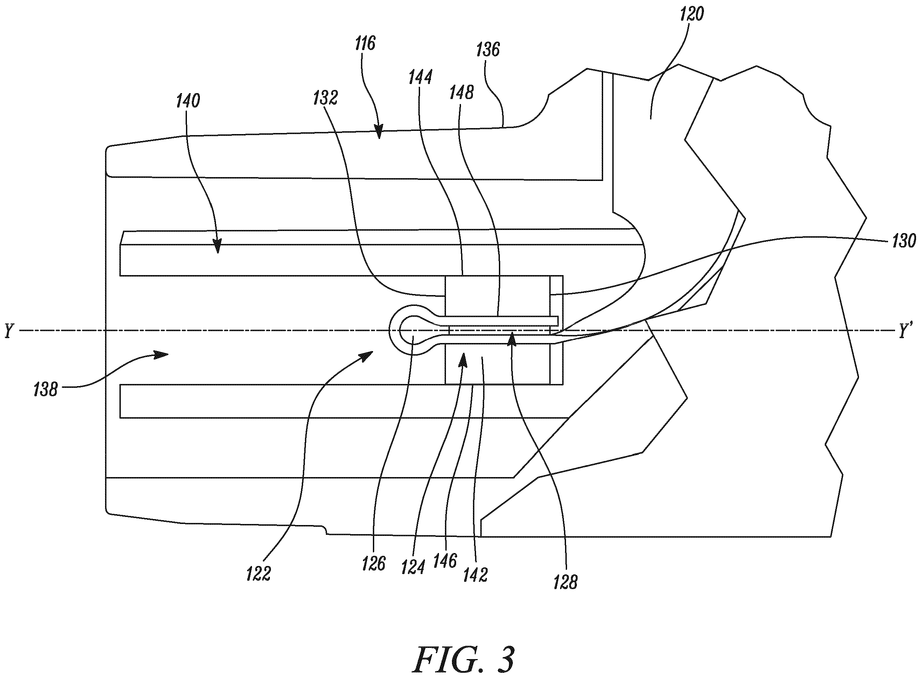

Further, the clamping element **126** is an elongated body with a drop-shaped cross-section such that the clamping element **126** is configured to at least partially penetrate or intrude into the opening **128** to complete the assembly of the fastening device **122** and to clamp the end of the pulling means **120** (shown in **FIG. 3****).** The clamping element **126** comprises a tapering portion **150** and a substantially semi-circular portion **152.** The tapering portion **150** is integrally formed with the substantially semi-circular portion **152.** The width **W** of the substantially semi-circular portion **152** is greater than the width **W1** of the opening **128** such that when the clamping element **126** at least partially penetrates or intrudes into the opening **128,** the substantially semi-circular portion **152** remains outside the opening **128** while the tapering portion **150,** being relatively thinner than the width **W and** the width **W1** penetrates into the opening **128.** Further, the length **L** of the clamping element **126** is substantially equal to the length **L1** of the opening **128** such that the clamping element **126** at least partially penetrates or intrudes into the opening **128.** The length **L** being substantially equal to the length **L1** according to the present application may denote that the length **L** is marginally smaller than the length **L1** to allow the clamping element **126** to be easily and substantially friction-free inserted into the opening **128.**

**FIG.** 3 illustrates a cross-section view of the grip portion **136** of the pull handle **116.** An end of the pulling means **120** is fastened to the pull handle **116** by the fastening device **122** housed or seated in the grip portion **136** of the pull handle **116.** The grip portion **136** of the pull handle **116** comprises a mounting opening **138,** particularly a mounting groove **138,** in which the fastening device **122** is inserted and seated substantially unmovable. The grip portion **136** and the mounting opening **138** are disposed in a direction perpendicular to the longitudinal axis **X-X'.** In other words, the grip portion **136** and the mounting opening **138** are disposed along the lateral axis **Y-Y'**. The mounting opening **138** comprises two spaced apart parallel U-shaped walls **140** (solely one is shown in FIG. 3) to facilitate substantially unmovable seating of the fastening device **122** in the grip portion **136** of the pull handle **116.** The two spaced apart parallel U-shaped walls **140** are formed in the grip portion **136** to contact the pull-through protection body **124** at an upper end and at a lower end, herein the upper end is the part which is adjacent to the upper side surface **144** and the lower end is the part which is adjacent to the lower side surface **146** of the pull-through protection body **124.**

The fastening device **122,** particularly the pull-through protection body **124** when seated in the mounting opening **138** at least partially engages with the two spaced apart parallel U-shaped walls **140** respectively.

When connecting the pulling means **120** to the pull handle **116,** the end of the pulling means **120** is passed through the opening **128** in the pull-through protection body **124** as the opening **128** is configured to allow the passage of the pulling means **120** through the pull-through protection body **124** from the first side surface **130** of the pull-through protection body **124** and/ or the second side surface **132** of the pull-through protection body **124.** The end of the pulling means is initially passed through the opening **128** from the first side surface **130** of the of the pull-through protection body **124** to the second side surface **132** of the pull-through protection body **124.**

Further, the clamping element **126** is positioned at the second side surface **132** of the pull-through protection body **124** such that the second side surface **132** faces the clamping element **126,** and the first side surface **130** faces the elongated handle **102.** The clamping element **126** is configured to fasten the pulling means **120** to the pull-through protection body **124** such that the end of the pulling means **120** that is guided through the opening **128** is at least partially wrapped around the clamping element **126** and inserted back through the opening **128** such that the clamping element **126** fastens, particularly clamps, the pulling means **120** to at least a part of the opening **128** for securing the pulling means **120** to the pull handle **116.** The inner surface **148** is configured to engage with the pulling means **120** when the pulling means **120** is fastened to the inner surface **148** of the opening **128** by the clamping element **126.**

Further, when the fastening device **122** clamps the end of the pulling means **120,** the fastening device **122** together with the pulling means **120** is inserted into the mounting opening **138** and seated substantially unmovable in the manner discussed above. The mounting opening **138** is configured such that the fastening device **122** is insertable only in a pre-defined orientation. In the pre-defined orientation, the clamping element 126 and the pulling means loop are positioned on the second side surface 132 of the pull-through protection body 124. The pulling means loop is formed by guiding the pulling means 120 through the opening 128, around the clamping element 126 and back through the opening 128.

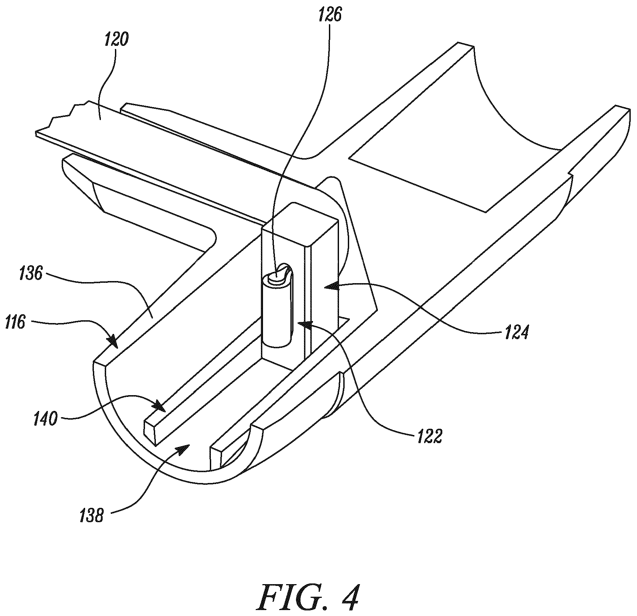

**FIG.** 4 illustrates another cross-section view of the grip portion **136** of the pull handle **116.** When the pulling means **120** becomes loose or slack during the lifecycle of the cutting tool **100,** the fastening device **122** together with the pulling means **120** is removed from the mounting opening **138** and re-inserted after turning the fastening device by a certain degree, preferably by **90** degrees, or **180** degrees, or **270** degrees, or **360** degrees. The turning of the fastening device **122** leads to a shortening of the pulling means **120** without demounting the pulling means **120** from the fastening device **122** as the pulling means gets wrapped around the fastening device **122** and hence shortens.

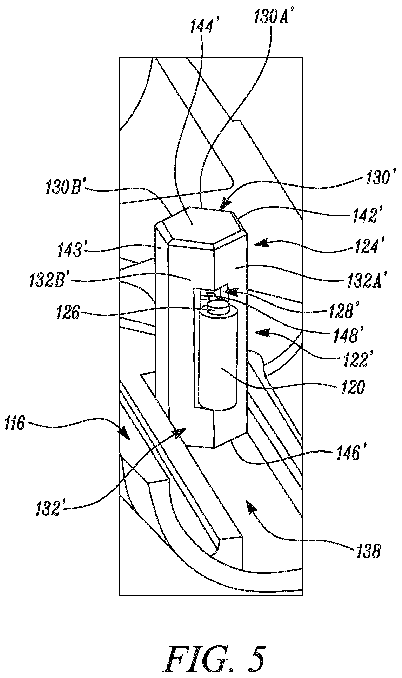

**FIG. 5** illustrates a perspective view of a fastening device **122'** according to another embodiment of the present invention. The fastening device **122'** comprises a pull-through protection body **124'** and the clamping element **126.** The pull-through protection body **124'** is an elongated pull-through protection body **124'.** The pull-through protection body **124'** is hexagonal prism-shaped. The pull-through protection body **124'** comprises a first side surface **130',a** second side surface **132'** such that the first side surface **130'** faces the elongated handle **102** or the longitudinal axis **X-X'** and the second side surface **132'** faces away from the elongated handle **102** or the longitudinal axis **X-X'** and faces towards the clamping element **126** when the fastening device **122'** is inserted in the pull handle 116. The first side surface **130'** comprises two adjacent side surfaces **130A'** and **130B'** of the hexagonal prism. The two adjacent side surfaces **130A'** and **130B'** faces the elongated handle **102** or the longitudinal axis **X-X'.** The second side surface **132'** comprises two adjacent side surfaces **132A'** and **132B'** of the hexagonal prism. The two adjacent side surfaces **132A'** and **132B'** faces away from the elongated handle **102** or the longitudinal axis **X-X'** and faces towards the clamping element **126** when the fastening device **122'** is inserted in the pull handle **116.**

The pull-through protection body **124'** further comprises a third side surface **142',** a fourth side surface **143',** an upper side surface **144',** and a lower side surface **146'.** The third side surface **142'** and the fourth side **143'** surface are disposed parallel to each other. Further, the upper side surface **144'** is disposed parallel to the lower side surface **146'.** Further, the first side surface **130',** the second side surface **132',** the third side surface **142',** and the fourth side surface **143'** form the circumference of the pull-through protection body **124'.** The upper side surface **144'** and the lower side surface **146'** each form one of the two opposing and remaining sides of the hexagonal prism-shaped pull-through protection body **124'.**

The pull-through protection body **124'** further comprises an elongated opening **128'.** The opening **128'** extends through the pull-through protection body **124'.** The opening **128'** in the pull-through protection body **124'** extends from the first side surface **130'** to the second side surface **132'.** The opening **128'** comprises an inner surface **148'** such that the inner surface **148'** extends from the first side surface **130'** to the second side surface **132'.** The opening **128'** is configured to allow the passage of the pulling means **120** through the pull-through protection body **124'** from the first side surface **130'** of the pull-through protection body **124'** and/ or the second side surface **132'** of the pull-through protection body **124'.**

Further, the clamping element **126** is positioned at the second side surface **132'** of the pull-through protection body **124'** such that the second side surface **132'** faces the clamping element **126,** and the first side surface **130'** faces the elongated handle **102.** The clamping element **126** is configured to fasten the pulling means **120** to the pull-through protection body **124'.** The end of the pulling means **120** is guided through the opening **128',** around the clamping element **126** and back through the opening **128'** such that the clamping element **126** fastens, particularly clamps, the pulling means **120** to at least a part of the opening **128'** for securing the pulling means **120** to the pull handle **116.** The inner surface **148'** is configured to engage with the pulling means **120** when the pulling means **120** is fastened to at least the part of the inner surface **148'** of the opening **128'** by the clamping element **126.**

Further, when the fastening device **122'** clamps the end of the pulling means **120,** the fastening device **122'** together with the pulling means **120** is inserted into the mounting opening **138** and seated substantially unmovable. The mounting opening **138** is configured such that the fastening device **122'** is insertable only in the pre-defined orientation The opening **128'** is formed between two opposing edges of the hexagonal prism-shaped pull-through protection body **124'.**

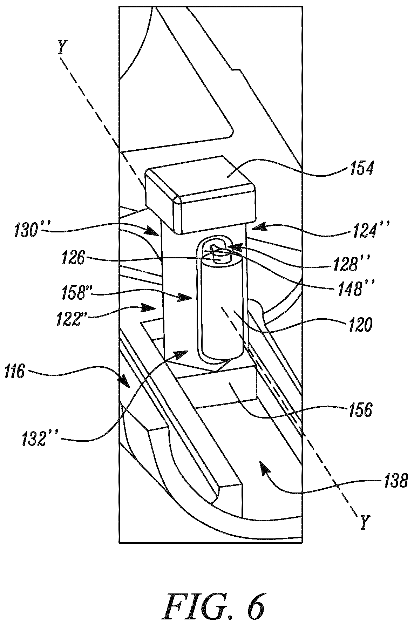

**FIG. 6** illustrates a perspective view of a fastening device **122"** according to another embodiment of the present invention. The fastening device **122"** comprises a pull-through protection body **124"** and the clamping element **126.** The pull-through protection body **124"** is an elongated pull-through protection body **124".** The pull-through protection body **124"** comprises a body part **158"** which is a rectangular prism-shaped body part **158".** The pull-through protection body **124"** further comprises a first end part **154,** and a second end part **156,** wherein the body part **158"** is positioned in-between the first end part **154** and the second end part **156.** The first end part **154** and the second end part **156** are cuboid shaped. Further, the first end part **154** and the second end part **156** of the pull-through protection body **124"** each comprises a first side surface **130"** and a second side surface **132",** wherein the first side surface **130"** faces the elongated handle **102,** and the second side surface **132"** faces away from the elongated handle **102** and faces towards the clamping element **126,** when the fastening device **122"** is inserted in the pull handle **116.**

The pull-through protection body **124"** further comprises an elongated opening **128".** The opening **128"** extends through the body part **158"** and comprises an inner surface **148",** wherein the inner surface **148"** extends entirely through the body part **158".** The opening **128"** is configured to allow the passage of the pulling means **120** through the pull-through protection body **124".** The end of the pulling means **120** is guided through the opening **128",** around the clamping element **126** and back through the opening **128"** such that the clamping element **126** fastens, particularly clamps, the pulling means **120** to at least a part of the opening **128"** for securing the pulling means **120** to the pull handle **116.** The inner surface **148"** is configured to engage with the pulling means **120** when the pulling means **120** is fastened to at least the part of the inner surface **148"** of the opening **128"** by the clamping element **126.** The clamping element **126** is inserted into the opening **128"** from the side of the body part **158"** which corresponds to the second side surface **132"** of the first end part **154** respectively the second side surface **132"** of the second end part **156.** In other words, the clamping element **126** is inserted into the opening **128"**, is positioned at the side of the body part **158**" corresponding to the second surface side **132**" . Further, when the fastening device **122"** clamps the end of the pulling means **120,** the fastening device **122"** together with the pulling means **120** is inserted into the mounting opening **138** and seated substantially unmovable using the first end part **154** and the second end part **156.** In other words, the first end part **154** and the second end part **156** are configured to engage with the mounting opening **138** such that the fastening device **122"** is inserted and seated substantially unmovable in the mounting opening **138.**

Further, the mounting opening **138** is configured such that the fastening device **122"** is insertable only in the pre-defined orientation. In particular, in the pre-defined orientation, the clamping element 126 and the pulling means loop are positioned on the second side surface 132" of the pull-through protection body 124". The pulling means loop is formed by guiding the pulling means 120 through the opening 128'', around the clamping element 126 and back through the opening 128".

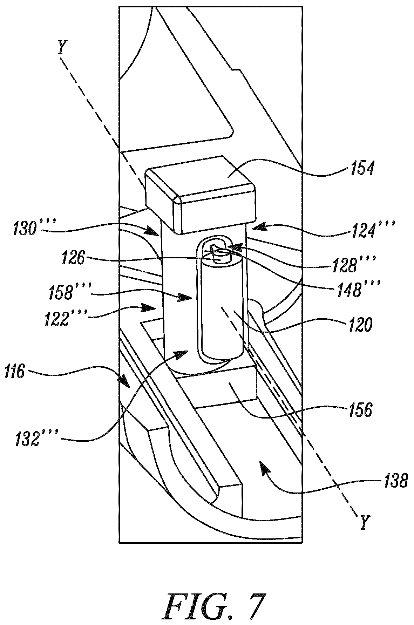

**FIG. 7** illustrates a perspective view of a fastening device **122‴** according to yet another embodiment of the present invention. The fastening device **122‴** comprises a pull-through protection body **124‴** and the clamping element **126.** The pull-through protection body **124‴** is an elongated pull-through protection body **124"'.** The pull-through protection body **124‴** comprises a cylinder-shaped body part **158"',** the first end part **154,** and the second end part 156. The body part 158‴ is positioned in-between the first end part 154 and the second end part 156. In particular, the first end portion **154** and the second end portion **156** cuboid shaped. The first end part **154** and the second end part **156** each comprises a first side surface **130‴** and a second side surface **132"',** wherein the first side surface **130‴** faces the elongated handle **102,** and the second side surface **132‴** faces away from the elongated handle **102** and faces towards the clamping element **126,** when the fastening device **122‴** is inserted in the pull handle **116.**

The body part **158‴** further comprises an elongated opening **128‴**. The opening **128‴** extends through the body part **158‴** and comprises an inner surface **148"',** wherein the inner surface **148‴** extends entirely from the first side surface **130‴** to the second side surface **132"'.** The opening **128‴** is configured to allow the passage of the pulling means **120** through the pull-through protection body **124‴.**

The end of the pulling means **120** is guided through the opening **128‴,** around the clamping element **126** and back through the opening **128‴** such that the clamping element **126** fastens, particularly clamps, the pulling means **120** to at least a part of the opening **128‴** for securing the pulling means **120** to the pull handle **116.** The inner surface **148‴** is configured to engage with the pulling means **120** when the pulling means **120** is fastened to at least the part of the inner surface **148‴** of the opening **128‴** by the clamping element **126.** The clamping element **126** is inserted into the opening **128‴** from the side of the body part **158‴** which corresponds to the second side surface **132‴** of the first end part **154** respectively the second side surface **132‴** of the second end part **156.** In other words, the clamping element **126** is inserted into the opening **128‴,** is positioned at the side of the body part **158‴** corresponding to the second surface side **132"'.**

Further, when the fastening device **122‴** clamps the end of the pulling means **120,** the fastening device **122‴** together with the pulling means **120** is inserted into the mounting opening **138** and seated substantially unmovable using the first end part **154** and the second end part **156.** The first end part **154** and the second end part **156** are configured to engage with the mounting opening **138** such that the fastening device **122‴** is inserted and seated substantially unmovable in the mounting opening **138.**

Further, the mounting opening **138** is configured such that the fastening device **122‴** is insertable only in the pre-defined orientation. In particular, in the pre-defined orientation, the clamping element 126 and the pulling means loop are positioned on the second side surface 132‴ of the pull-through protection body 124‴. The pulling means loop is formed by guiding the pulling means 120 through the opening 128‴, around the clamping element 126 and back through the opening 128‴.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Cutting Tool
- **102**: Elongated Handle
- **104**: Cutting Head
- **106**: First End
- **108**: Second End
- **110**: Stationary Blade
- **112**: Movable Blade
- **114**: Pulling Sleeve
- **116**: Pull Handle
- **118**: Stop Element
- **120**: Pulling Means
- **122**: Fastening Device
- **122'**: Fastening Device
- **122"**: Fastening Device
- **122‴**: Fastening Device
- **124**: Pull-Through Protection Body
- **124'**: Pull-Through Protection Body
- **124"**: Pull-Through Protection Body
- **124‴**: Pull-Through Protection Body
- **126**: Clamping Element
- **128**: Opening
- **128'**: Opening
- **128"**: Opening
- **128‴**: Opening
- **130**: First side surface
- **130'**: First side surface
- **130A'**: Side Surface
- **130B'**: Side Surface
- **130"**: First side surface
- 130**‴**: First side surface
- **132**: Second side surface
- **132'**: Second side surface
- **132A'**: Side Surface
- **132B'**: Side Surface
- **132"**: Second side surface
- **132‴**: Second side surface
- **134**: Engaging portion
- **136**: Grip Portion
- **138**: Mounting Opening/ Mounting Groove
- **140**: U-shaped Walls
- **142, 142'**: Third Side Surface
- **143, 143'**: Fourth Side Surface
- **144, 144'**: Upper Side Surface
- **146, 146'**: Lower Side Surface
- **148**: Inner Surface
- **148'**: Inner Surface
- **148"**: Inner Surface
- **148‴**: Inner Surface
- **150**: Tapering Portion
- **152**: Semi-circular portion
- **154**: First Side Portion
- **156**: Second Side Portion
- **158"**: Body Part
- **158‴**: Body Part
- **W**: Width
- **W1**: Width
- **L**: Length
- **L1**: Length
- **X-X'**: Longitudinal Axis
- **Y-Y**': Lateral Axis

## Claims

1. A cutting tool **(100),** particularly a lopper, comprising:
an elongated handle **(102),**
a cutting head **(104)** mounted to a first end **(106)** of the elongated handle **(102),**
a pull handle **(116)** provided at a second end **(108)** of the elongated handle **(102)** being opposite of the first end **(106),** wherein the pull handle **(116)** is movable relative to the elongated handle **(102),**
a pulling means **(120)** arranged at least partially in the elongated handle **(102)** such that a force is transmittable from the pull handle **(116)** to the cutting head **(104)** via the pulling means **(120),**
wherein an end of the pulling means **(120)** is fastened to the pull handle **(116)** by a fastening device **(122, 122', 122", 122‴),**
**characterized in that:**
the fastening device **(122, 122', 122", 122"')** comprises
a pull-through protection body **(124, 124', 124", 124‴)** comprising an opening **(128, 128', 128", 128‴)** extending through the pull-through protection body **(124, 124', 124", 124‴),** and
a clamping element **(126)** configured to fasten the pulling means **(120)** to the pull-through protection body **(124, 124', 124", 124‴**),
wherein the end of the pulling means **(120)** is guided through the opening **(128, 128'**, **128"**, **128‴**), around the clamping element **(126)** and back through the opening **(128, 128'**, **128"**, **128"')** such that the clamping element **(126)** fastens, particularly clamps, the pulling means **(120)** to at least a part of the opening **(128, 128'**, **128", 128"')** for securing the pulling means **(120)** to the pull handle **(116).**

2. The cutting tool **(100)** according to claim 1,
wherein the pull-through protection body **(124, 124'**, **124"**, **124‴**) is an elongated pull-through protection body **(124, 124'**, **124"**, **124‴**) comprising an elongated opening **(128, 128'**, **128"**, **128‴**).

3. The cutting tool **(100)** according to any one of the preceding claims,
wherein the pull-through protection body **(124, 124', 124", 124‴)** comprises a first side surface **(130, 130', 130", 130‴**) and a second side surface **(132, 132', 132", 132‴)** such that the opening **(128, 128', 128", 128‴**) in the pull-through protection body **(124, 124', 124", 124‴)** extends from the first side surface **(130, 130', 130", 130‴)** to the second side surface **(132, 132', 132", 132"'),** and
wherein the clamping element **(126)** is positioned at the second side surface **(132, 132', 132", 132‴)** of the pull-through protection body **(124, 124', 124", 124‴**) such that the second side surface **(132, 132', 132", 132‴**) faces the clamping element **(126),** and the first side surface **(130, 130', 130", 130‴**) faces the elongated handle **(102).**

4. The cutting tool **(100)** according to any one of the preceding claims, wherein the opening **(128, 128', 128", 128‴)** is configured to allow the passage of the pulling means **(120)** through the pull-through protection body **(124, 124', 124", 124"')** from the first side surface **(130, 130', 130", 130‴**) of the pull-through protection body **(124, 124', 124", 124‴**) and/ or the second side surface **(132, 132', 132", 132‴**) of the pull-through protection body **(124, 124', 124", 124‴**).

5. The cutting tool **(100)** according to any one of the preceding claims,
wherein the opening **(128, 128', 128", 128‴**) comprises an inner surface **(148, 148', 148", 148‴)** such that the inner surface **(148, 148', 148", 148‴**) extends from the first side surface **(130, 130', 130", 130"')** to the second side surface **(132, 132', 132", 132‴**), **and**
wherein the inner surface **(148, 148', 148", 148‴**) is configured to engage with the pulling means **(120)** when the pulling means **(120)** is fastened to the inner surface **(148, 148', 148", 148‴)** of the opening **(128, 128', 128", 128‴)** by the clamping element **(126).**

6. The cutting tool **(100)** according to any one of the preceding claims,
wherein the pull handle **(116)** comprises a mounting opening **(138),** particularly a mounting groove **(138),** in which the fastening device **(122, 122', 122", 122‴**) is inserted and seated substantially unmovable.

7. The cutting tool **(100)** according to any one of the preceding claims,
wherein the mounting opening **(138)** is configured such that the fastening device **(122, 122', 122", 122‴**) is insertable only in a pre-defined orientation, and
in particular wherein in the pre-defined orientation, the clamping element **(126)** and the pulling means loop are positioned on the second side surface **(132, 132', 132", 132‴**) of the pull-through protection body **(124, 124'**, **124"**, **124‴**), wherein the pulling means loop is formed by guiding the pulling means **(120)** through the opening **(128, 128'**, **128"**, **128‴**), around the clamping element **(126)** and back through the opening **(128, 128'**, **128"**, **128‴**).

8. The cutting tool **(100)** according to any one of the preceding claims, wherein the pull-through protection body **(124, 124', 124")** is a prism-shaped body **(124, 124'**, **124"),** preferably a hexagonal prism **(124'), a** square prism **(124),** or a rectangular prism **(124").**

9. The cutting tool (100) according to any one of the claims 1 to 7,
wherein the pull-through protection body **(124", 124‴**) comprises a body part **(158",** 158**‴**), a first end part **(154),** and a second end part **(156),**
wherein the body part **(158",** 158**‴**) is positioned in-between the first end part **(154)** and the second end part **(156),** and
wherein the first end portion **(154)** and the second end portion **(156)** are configured to engage with the mounting opening **(138)** such that the fastening device **(122",** 122**‴**) is inserted and seated substantially unmovable in the mounting opening **(138),** and
in particular wherein the first end portion **(154)** and/or the second end portion **(156)** is cube-shaped or cuboid-shaped.

10. The cutting tool **(100)** according to any one of the preceding claims, wherein a turning of the fastening device **(122, 122', 122", 122‴**) leads to a shortening of the pulling means **(120)** without demounting the pulling means **(120)** from the fastening device **(122, 122', 122", 122‴**).

11. The cutting tool **(100)** according to any one of the preceding claims, wherein the clamping element **(126)** is an elongated body with a substantially drop-shaped cross-section.

12. The cutting tool **(100)** according any one of the preceding claims, wherein the pulling means **(120)** is a pulling belt.

13. The cutting tool **(100)** according to any one of the preceding claims, wherein the elongated handle **(102) is** a telescopic elongated handle such that the elongated handle **(102)** comprises at least two, particularly three handle portions being telescopically movable into each other.

14. The cutting tool **(100)** according to any one of the preceding claims,
wherein the cutting tool **(100)** comprises a pulling sleeve **(114)** movably mounted to the elongated handle **(102)** at a position between the first end **(106)** and the second end **(108)** of the elongated handle **(102),** and
wherein the pulling means **(120)** is further connected to the pulling sleeve **(114)** such that the pulling means **(120)** is operable by the pull handle **(116)** or the pulling sleeve **(114).**

## Patentansprüche

1. Schneidewerkzeug (100), insbesondere eine Astschere, umfassend:
einen länglichen Griff **(102),**
einen Schneidkopf **(104),** der an einem ersten Ende **(106)** des länglichen Griffs **(102)** angebracht ist,
einen Zuggriff **(116),** bereitgestellt an einem zweiten Ende **(108)** des länglichen Griffs **(102)** gegenüberliegend dem ersten Ende **(106),** wobei der Zuggriff **(116)** relativ zu dem länglichen Griff **(102)** bewegbar ist,
ein Zugmittel **(120)** das mindestens teilweise in dem länglichen Griff **(102)** angeordnet ist, so dass eine Kraft von dem Zuggriff **(116)** über das Zugmittel **(120)** auf den Schneidkopf **(104)** übertragbar ist, wobei ein Ende des Zugmittels **(120)** mittels einer Spannvorrichtung **(122, 122', 122", 122‴**) an dem Zuggriff **(116)** befestigt ist, **dadurch gekennzeichnet, dass:**
die Spannvorrichtung **(122, 122', 122", 122‴**) einen Durchziehschutzkörper **(124, 124', 124", 124‴)** umfasst, umfassend eine Öffnung **(128, 128', 128", 128‴),** die sich durch den Durchziehschutzkörper **(124, 124', 124", 124‴)** erstreckt, und
ein Klemmelement **(126),** das konfiguriert ist zum Befestigen des Zugmittels **(120)** an dem Durchziehschutzkörper **(124, 124', 124", 124‴),** wobei das Ende des Zugmittels **(120)** durch die Öffnung **(128, 128', 128", 128‴)** geführt ist, um das Klemmelement **(126)** herum und zurück durch die Öffnung **(128, 128', 128", 128‴),** derart, dass das Klemmelement **(126)** das Zugmittel **(120)** an mindestens einem Teil der Öffnung **(128, 128', 128", 128‴)** befestigt, insbesondere festklemmt, zum Sichern des Zugmittels **(120)** an dem Zuggriff **(116).**

2. Schneidewerkzeug **(100)** nach Anspruch 1, wobei der Durchziehschutzkörper **(124, 124', 124", 124‴)** ein länglicher Durchziehschutzkörper **(124, 124', 124", 124‴)** ist, der eine längliche Öffnung **(128, 128'**, **128", 128‴)** umfasst.

3. Schneidewerkzeug **(100)** nach einem der vorstehenden Ansprüche, wobei der Durchziehschutzkörper **(124, 124', 124", 124"')** eine erste Seitenoberfläche **(130, 130', 130", 130‴**) und eine zweite Seitenoberfläche **(132, 132', 132", 132‴**) umfasst, so dass sich die Öffnung **(128, 128', 128", 128‴)** in dem Durchziehschutzkörper **(124, 124', 124", 124‴)** von der ersten Seitenoberfläche **(130, 130', 130", 130‴)** zu der zweiten Seitenoberfläche **(132, 132', 132", 132‴)** erstreckt, und wobei das Klemmelement **(126)** an der zweiten Seitenoberfläche **(132, 132', 132", 132‴)** des Durchziehschutzkörpers **(124, 124', 124", 124‴)** positioniert ist, so dass die zweite Seitenoberfläche **(132, 132', 132", 132‴)** dem Klemmelement **(126)** zugewandt ist, und die erste Seitenoberfläche **(130, 130', 130", 130‴)** dem länglichen Griff **(102)** zugewandt ist.

4. Schneidewerkzeug **(100)** nach einem der vorstehenden Ansprüche, wobei die Öffnung **(128, 128', 128", 128‴)** konfiguriert ist, um den Durchgang des Zugmittels **(120)** durch den Durchziehschutzkörper **(124, 124', 124", 124‴)** von der ersten Seitenoberfläche **(130, 130', 130", 130‴**) des Durchziehschutzkörpers **(124, 124', 124", 124‴)** und/oder der zweiten Seitenoberfläche **(132, 132', 132", 132‴**) des Durchziehschutzkörpers **(124, 124', 124", 124‴**) zu ermöglichen.

5. Schneidewerkzeug **(100)** nach einem der vorstehenden Ansprüche, wobei die Öffnung **(128, 128', 128", 128‴)** eine innere Oberfläche **(148, 148', 148", 148‴)** umfasst, so dass sich die innere Oberfläche **(148, 148', 148", 148‴)** von der ersten Seitenoberfläche **(130, 130', 130", 130‴)** zu der zweiten Seitenoberfläche **(132, 132', 132", 132‴)** erstreckt, und wobei die innere Oberfläche **(148, 148', 148", 148‴)** konfiguriert ist, um mit dem Zugmittel **(120)** in Eingriff zu stehen, wenn das Zugmittel **(120)** an der inneren Oberfläche **(148, 148', 148", 148‴)** der Öffnung **(128, 128', 128", 128‴)** durch das Klemmelement **(126)** befestigt ist.

6. Schneidewerkzeug **(100)** nach einem der vorstehenden Ansprüche,
wobei der Zuggriff **(116)** eine Befestigungsöffnung **(138),** insbesondere eine Befestigungsnut **(138),** umfasst, in welcher die Spannvorrichtung **(122, 122', 122", 122‴)** eingesetzt und im Wesentlichen unbeweglich gelagert ist.

7. Schneidewerkzeug **(100)** nach einem der vorstehenden Ansprüche, wobei die Montageöffnung **(138)** derart konfiguriert ist, dass die Spannvorrichtung **(122, 122', 122", 122‴)** nur in einer vordefinierten Ausrichtung einsetzbar ist, und insbesondere wobei in der vordefinierten Ausrichtung das Klemmelement **(126)** und die Zugmittelschlaufe auf der zweiten Seitenoberfläche **(132, 132', 132", 132‴)** des Durchziehschutzkörpers **(124, 124', 124", 124‴**) positioniert sind, wobei die Zugmittelschlaufe durch Führen des Zugmittels **(120)** durch die Öffnung **(128, 128'**, **128", 128‴),** um das Klemmelement **(126)** und zurück durch die Öffnung **(128, 128', 128", 128‴)** gebildet wird.

8. Schneidewerkzeug **(100)** nach einem der vorstehenden Ansprüche, wobei der Durchziehschutzkörper **(124, 124', 124")** ein prismenförmiger Körper **(124, 124', 124")** ist, vorzugsweise ein sechseckiges Prisma **(124'),** ein quadratisches Prisma **(124)** oder ein rechteckiges Prisma **(124").**

9. Schneidewerkzeug **(100)** nach einem der Ansprüche 1 bis 7, wobei der Durchziehschutzkörper **(124", 124‴)** einen Körperteil **(158", 158‴)** einen ersten Abschlussteil **(154)** und einen zweiten Abschlussteil **(156)** umfasst, wobei der Körperteil **(158", 158‴)** zwischen dem ersten Abschlussteil **(154)** und dem zweiten Abschlussteil **(156)** positioniert ist, und wobei der erste Endabschnitt **(154)** und der zweite Endabschnitt **(156)** konfiguriert sind, um mit der Montageöffnung **(138)** in Eingriff zu stehen, so dass die Spannvorrichtung **(122", 122‴)** eingesetzt und im Wesentlichen unbeweglich in der Montageöffnung **(138)** gelagert ist, und insbesondere wobei der erste Endabschnitt **(154)** und/oder der zweite Endabschnitt **(156)** würfelförmig oder quaderförmig ist.

10. Schneidewerkzeug **(100)** nach einem der vorstehenden Ansprüche, wobei ein Drehen der Spannvorrichtung **(122, 122', 122", 122"')** zu einer Verkürzung des Zugmittels **(120)** führt, ohne das Zugmittel **(120)** von der Spannvorrichtung **(122, 122', 122", 122"')** zu demontieren.

11. Schneidewerkzeug **(100)** nach einem der vorstehenden Ansprüche, wobei das Klemmelement **(126)** ein länglicher Körper mit einem im Wesentlichen tropfenförmigen Querschnitt ist.

12. Schneidewerkzeug **(100)** nach einem der vorstehenden Ansprüche, wobei das Zugmittel **(120)** ein Zugriemen ist.

13. Schneidewerkzeug **(100)** nach einem der vorstehenden Ansprüche, wobei der längliche Griff **(102)** ein teleskopischer länglicher Griff ist, so dass der längliche Griff **(102)** mindestens zwei, insbesondere drei Griffabschnitte umfasst, die teleskopisch ineinander bewegbar sind.

14. Schneidewerkzeug **(100)** nach einem der vorstehenden Ansprüche, wobei das Schneidewerkzeug **(100)** eine Zughülse **(114)** umfasst, die beweglich an dem länglichen Griff **(102)** an einer Position zwischen dem ersten Ende **(106)** und dem zweiten Ende **(108)** des länglichen Griffs **(102)** angebracht ist, und wobei das Zugmittel **(120)** ferner mit der Zughülse **(114)** verbunden ist, so dass das Zugmittel **(120)** durch den Zuggriff **(116)** oder die Zughülse **(114)** betätigbar ist.

## Revendications

1. Outil de coupe **(100),** en particulier ébrancheur, comprenant :
une poignée allongée **(102),**
une tête de coupe **(104)** montée sur une première extrémité **(106)** de la poignée allongée **(102),**
une poignée de traction **(116)** prévue à une seconde extrémité **(108)** de la poignée allongée **(102)** opposée à la première extrémité **(106),** dans lequel la poignée de traction **(116)** est mobile par rapport à la poignée allongée **(102),**
un moyen de traction **(120)** disposé au moins partiellement dans la poignée allongée **(102)** de telle sorte qu'une force peut être transmise de la poignée de traction **(116)** à la tête de coupe **(104)** par l'intermédiaire du moyen de traction **(120),** dans lequel une extrémité du moyen de traction **(120)** est fixée à la poignée de traction **(116)** par un dispositif de fixation **(122, 122', 122", 122"'), caractérisé en ce que** :
le dispositif de fixation **(122, 122', 122", 122"')** comprend un corps de protection de traction traversante **(124, 124', 124", 124‴**) comprenant une ouverture **(128, 128', 128", 128‴**) s'étendant à travers le corps de protection de traction traversante **(124, 124', 124", 124‴**), et
un élément de serrage **(126)** conçu pour fixer le moyen de traction **(120)** au corps de protection de traction traversante **(124, 124', 124", 124‴**), dans lequel l'extrémité du moyen de traction **(120)** est guidée à travers l'ouverture **(128, 128', 128", 128‴**), autour de l'élément de serrage **(126)** et de nouveau à travers l'ouverture **(128, 128', 128", 128‴**) de telle sorte que l'élément de serrage **(126)** fixe, en particulier serre, le moyen de traction **(120)** à au moins une partie de l'ouverture **(128, 128', 128", 128‴**) pour attacher le moyen de traction **(120)** à la poignée de traction **(116).**

2. Outil de coupe **(100)** selon la revendication 1,
dans lequel le corps de protection de traction traversante **(124, 124', 124", 124‴**) est un corps de protection de traction traversante **(124, 124', 124", 124‴**) allongé comprenant une ouverture **(128, 128', 128", 128‴**) allongée.

3. Outil de coupe **(100)** selon l'une quelconque des revendications précédentes,
dans lequel le corps de protection de traction traversante **(124, 124', 124", 124‴**) comprend une première surface latérale **(130, 130', 130", 130‴**) et une seconde surface latérale **(132, 132', 132", 132‴**) de telle sorte que l'ouverture **(128, 128', 128", 128‴**) dans le corps de protection de traction traversante **(124, 124', 124", 124"')** s'étend à partir de la première surface latérale **(130,130', 130", 130‴**) jusqu'à la seconde surface latérale **(132, 132', 132", 132‴**), et
dans lequel l'élément de serrage **(126)** est positionné au niveau de la seconde surface latérale **(132, 132', 132", 132‴**) du corps de protection de traction traversante **(124, 124', 124", 124"')** de telle sorte que la seconde surface latérale **(132, 132', 132", 132‴**) fait face à l'élément de serrage **(126),** et la première surface latérale **(130, 130', 130", 130‴**) fait face à la poignée allongée **(102).**

4. Outil de coupe **(100)** selon l'une quelconque des revendications précédentes,
dans lequel l'ouverture **(128, 128', 128", 128‴**) est conçue pour permettre le passage du moyen de traction **(120)** à travers le corps de protection de traction traversante **(124, 124', 124", 124‴**) à partir de la première surface latérale **(130, 130', 130", 130‴**) du corps de protection de traction traversante **(124, 124', 124", 124‴**) et/ou de la seconde surface latérale **(132, 132', 132", 132‴**) du corps de protection de traction traversante **(124, 124', 124", 124‴).**

5. Outil de coupe **(100)** selon l'une quelconque des revendications précédentes,
dans lequel l'ouverture **(128, 128', 128", 128‴**) comprend une surface intérieure **(148, 148', 148", 148‴)** de telle sorte que la surface intérieure **(148, 148', 148", 148‴**) s'étend depuis la première surface latérale **(130, 130', 130", 130‴**) jusqu'à la seconde surface latérale **(132, 132', 132", 132‴**), et
dans lequel la surface intérieure **(148, 148', 148", 148‴**) est conçue pour venir en prise avec le moyen de traction **(120)** lorsque le moyen de traction **(120)** est fixé à la surface intérieure **(148, 148', 148", 148‴**) de l'ouverture **(128, 128', 128", 128‴**) par l'élément de serrage **(126).**

6. Outil de coupe **(100)** selon l'une quelconque des revendications précédentes,
dans lequel la poignée de traction **(116)** comprend une ouverture de montage **(138),** en particulier une rainure de montage **(138),** dans laquelle le dispositif de fixation **(122, 122', 122", 122‴**) est inséré et placé de manière à être sensiblement immobile.

7. Outil de coupe **(100)** selon l'une quelconque des revendications précédentes,
dans lequel l'ouverture de montage **(138)** est conçue de telle sorte que le dispositif de fixation **(122, 122', 122", 122‴**) ne peut être inséré que dans une orientation prédéfinie, et
en particulier dans lequel, dans l'orientation prédéfinie, l'élément de serrage **(126)** et la boucle de moyen de traction sont positionnés sur la seconde surface latérale **(132, 132', 132", 132‴**) du corps de protection de traction traversante **(124, 124', 124", 124‴**), dans lequel la boucle de moyen de traction est formée en guidant le moyen de traction **(120)** à travers l'ouverture **(128, 128', 128", 128‴**), autour de l'élément de serrage **(126)** et de nouveau à travers l'ouverture **(128, 128', 128", 128‴**)

8. Outil de coupe **(100)** selon l'une quelconque des revendications précédentes,
dans lequel le corps de protection de traction traversante **(124, 124', 124")** est un corps en forme de prisme **(124, 124', 124"),** de préférence un prisme hexagonal **(124'),** un prisme carré **(124),** ou un prisme rectangulaire **(124").**

9. Outil de coupe **(100)** selon l'une quelconque des revendications 1 à 7, dans lequel le corps de protection de traction traversante **(124", 124‴**) comprend une partie de corps **(158", 158‴),** une première partie d'extrémité **(154),** et une seconde partie d'extrémité **(156),**
dans lequel la partie de corps **(158", 158‴)** est positionnée entre la première partie d'extrémité **(154)** et la seconde partie d'extrémité **(156),** et dans lequel la première partie d'extrémité **(154)** et la seconde partie d'extrémité **(156)** sont conçues pour venir en prise avec l'ouverture de montage **(138)** de telle sorte que le dispositif de fixation **(122", 122‴**) est inséré et placé de manière à être sensiblement immobile dans l'ouverture de montage **(138),** et
en particulier dans lequel la première partie d'extrémité **(154)** et/ou la seconde partie d'extrémité **(156)** sont en forme de cube ou cuboïdes.

10. Outil de coupe **(100)** selon l'une quelconque des revendications précédentes,
dans lequel une rotation du dispositif de fixation **(122, 122', 122", 122"')** entraîne un raccourcissement du moyen de traction **(120)** sans démonter le moyen de traction **(120)** du dispositif de fixation **(122, 122', 122", 122"').**

11. Outil de coupe **(100)** selon l'une quelconque des revendications précédentes,
dans lequel l'élément de serrage **(126)** est un corps allongé avec une section transversale sensiblement en forme de goutte.

12. Outil de coupe **(100)** selon l'une quelconque des revendications précédentes,
dans lequel le moyen de traction **(120)** est une courroie de traction.

13. Outil de coupe **(100)** selon l'une quelconque des revendications précédentes,
dans lequel la poignée allongée **(102)** est une poignée allongée télescopique de telle sorte que la poignée allongée **(102)** comprend au moins deux, en particulier trois, parties de poignée mobiles de manière télescopique les unes dans les autres.

14. Outil de coupe **(100)** selon l'une quelconque des revendications précédentes,
dans lequel l'outil de coupe **(100)** comprend un manchon de traction **(114)** monté de manière mobile sur la poignée allongée **(102)** au niveau d'une position située entre la première extrémité **(106)** et la seconde extrémité **(108)** de la poignée allongée **(102),** et dans lequel le moyen de traction **(120)** est en outre relié au manchon de traction **(114)** de telle sorte que le moyen de traction **(120)** peut être actionné par la poignée de traction **(116)** ou le manchon de traction **(114).**
